# FASCICULE DE BREVET EUROPEEN

(11) **EP 2 270 958 B1**
(45) Date de publication et mention de la délivrance du brevet: **23.05.2012**
(21) Numéro de dépôt: 10167683.1
(22) Date de dépôt: 29.06.2010
(51) Int. Cl.: H02K 5/128, F16C 39/06, F16J 15/00, F04D 29/00, G01D 11/24

(54) **Machine tournante chemisée et son procédé de fabrication**
Eingekapselte rotierende Maschine und ihr Herstellungsverfahren
Encapsulated rotating machine and its method of manufacture

(30) Priorité: 03.07.2009 FR 0954578
(43) Date de publication de la demande: 05.01.2011
(73) Titulaire: Société de Mécanique Magnétique, 27950 Saint Marcel (FR)
(72) Inventeur: Baudelocque, Luc, 27200 Vernon (FR); Moulin, David, 75015 Paris (FR)
(74) Mandataire: Thévenet, Jean-Bruno

(56) Documents cités:
- EP-A1- 0 415 046
- EP-A1- 1 624 167
- EP-A1- 1 830 081
- FR-A1- 2 768 470

## Description

### Domaine de l'invention

La présente invention a pour objet une machine tournante chemisée équipée d'un rotor en contact avec une atmosphère gazeuse ou liquide corrosive, acide ou porteuse de particules, et concerne plus particulièrement une machine tournante équipée de paliers magnétiques chemisés, de détecteurs chemisés pour paliers magnétiques et/ou d'un moteur électrique chemisé.

L'invention concerne également un procédé de fabrication d'une telle machine.

### Art antérieur

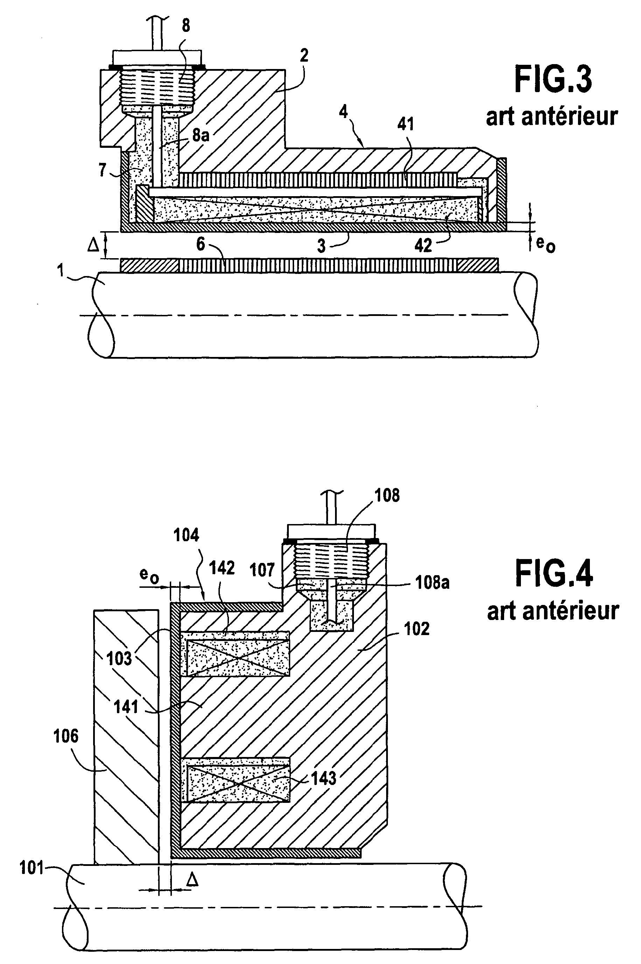

On a représenté sur la figure 3 un exemple de palier magnétique radial chemisé qui comprend une armature rotorique 6 solidaire d'un rotor 1 en contact avec une atmosphère agressive, et un induit de stator 4 solidaire d'un support fixe 2, l'induit 4 qui comprend un ou plusieurs bobinages 42 et un corps ferromagnétique 41 étant placé dans une enceinte de protection métallique comprenant une partie massive solidaire du support fixe 2 ou confondue avec celui-ci, une chemine fine 3 et un passage hermétique 8 pour un câblage 8a d'alimentation des bobinages 42. La chemise fine 3 d'épaisseur e0 est située à une distance Δ de l'armature rotorique 6 pour définir l'entrefer du palier magnétique.

Une résine de surmoulage 7 permet de remplir la quasi-totalité des vides internes laissés dans le corps ferromagnétique 41, les bobinages 42 et le câblage 8a de telle manière que la chemise fine 3 puisse s'appuyer sur une surface plane ou cylindrique lorsque le palier ou son détecteur associé est placé dans une ambiance pressurisée.

La figure 4 montre d'une façon similaire un exemple de palier magnétique axial chemisé qui comprend une armature rotorique 106 en forme de disque fixé perpendiculairement à l'axe d'un rotor 101 en contact avec une atmosphère agressive, et un induit de stator 104 solidaire d'un support fixe 102. L'induit 104 comprend des bobinages 142, 143 et un corps ferromagnétique 141, qui sont placés dans une enceinte de protection métallique comprenant une partie massive solidaire du support fixe 102 ou confondue avec celui-ci, une chemise fine 103 et un passage hermétique 108 pour un câblage 108a d'alimentation des bobinages 141, 142. Un entrefer de valeur Δ est défini entre l'armature rotorique 106 et la chemise fine 103 d'épaisseur e0.

Comme dans le cas du palier magnétique radial chemisé de la figure 3, une résine de surmoulage 107 permet de remplir la quasi-totalité des vides internes laissés dans le corps ferromagnétique 141, les bobines 142, 143 et le câblage 108a de telle manière que la chemise fine 103 puisse s'appuyer sur une surface plane ou cylindrique lorsque le palier ou son détecteur associé est placé dans une ambiance pressurisée.

Dans le cas des paliers magnétiques connus des figures 3 et 4, quelle que soit la technologie employée, il est très difficile de garantir d'une part que le remplissage de l'enceinte de protection soit parfait, d'autre part que l'herméticité de cette même enceinte soit parfaite. Les taux de fuite globaux généralement constatés sont de l'ordre de 1×10⁻⁸ mbar * l/s (taux mesuré sous hélium à 1 bar relatif).

L'ensemble du palier chemisé est destiné à être placé dans un milieu ambiant gazeux de pression variable fluctuant avec le procédé de traitement (typiquement de 1 à 200 bar).

L'enceinte de protection est constituée des armatures 2, 3, 8 ou 102, 103, 108. L'armature constituée par la chemise 3 ou 103 ayant une épaisseur (e0) de l'ordre de 0,5 à 1 mm, une surpression interne de l'enceinte par rapport à la pression externe peut suffire à déformer la chemise 3 ou 103 jusqu'à combler l'entrefer (Δ) de valeur typique 0,5 à 1 mm et aboutir à la destruction de la chemise 3 ou 103 par contact avec l'armature rotorique 6 ou 106 qui lui fait face.

On peut ainsi calculer qu'avec le taux de fuite précité de 1×10⁻⁸ mbar * l/s un volume de 1 cm³ placé dans un gaz à 100 bar au-dessus de la pression interne de l'enceinte 2, 3, 8 respectivement 102, 103, 108 augmente sa pression de 1 bar en 12 jours environ.

Il faut noter que lors de la mise en oeuvre d'une chemise 3, 103 très fine et large, comme c'est le cas notamment pour une chemise 103 d'un palier axial, la moindre surpression interne déforme la chemise, d'abord de manière élastique, puis de manière plastique.

Dans l'exemple d'une butée axiale de diamètre 450 mm munie d'une chemise 103 d'épaisseur 0,5 mm, on peut calculer que 0,1 bar de surpression suffit à provoquer une déflexion de la chemise 103 de 1 mm, comblant ainsi l'entrefer (Δ). Cette pression devient 0,6 bar si la chemise a une épaisseur de 1 mm. Une surpression de valeur intermédiaire donne une déflexion de valeur intermédiaire.

Dans le cas des paliers chemisés de l'art antérieur, l'enceinte protectrice est fermée en condition atmosphérique et les interstices résiduels internes à l'enceinte ont une forte teneur en oxygène. Les paliers chemisés étant généralement utilisés dans une ambiance de gaz naturel (CH4), il se crée via les fuites une ambiance interne à l'enceinte qui peut être explosible.

Dans tous les cas, la surpression interne supérieure à la pression atmosphérique créée à l'intérieur d'une enceinte par suite de fuites cumulées dans le temps provoquera, en cas de dépressurisation, une déformation, de la chemise qui pourra aller jusqu'à combler l'entrefer Δ et endommager le palier.

On connaît en particulier par le document FR 2 768 470 une pompe rotative à rotor immergé avec une chemise de protection de l'élément statorique du moteur de la pompe.

### Définition et objet de l'invention

La présente invention vise à remédier aux inconvénients précités et en particulier à tolérer, dans un ensemble chemisé pour machine tournante, tel qu'un palier magnétique axial ou radial chemisé, un détecteur chemisé associé à un tel palier et/ou un moteur électrique chemisé, une élévation de pression interne due aux fuites sans risque de déformation en cas de dépressurisation de l'ambiance dans laquelle il est placé, à augmenter ainsi considérablement les intervalles de maintenance et à garantir qu'un mélange explosible ne peut pas être emmagasiné.

Ces buts sont atteints, conformément à l'invention, grâce à une machine tournante chemisée selon la revendication 1 équipée d'un rotor en contact avec une atmosphère gazeuse ou liquide corrosive, acide ou porteuse de particules, et d'un ensemble électrique fonctionnel comprenant une armature rotorique solidaire du rotor et placée dans ladite atmosphère gazeuse et un induit de stator solidaire d'un support fixe et placé en regard de ladite armature rotorique, l'induit de stator comprenant au moins un bobinage et un corps ferromagnétique placés dans une enceinte de protection métallique comprenant une partie massive solidaire du support fixe ou confondue avec celui-ci, une chemise fine et un passage hermétique pour un câblage d'alimentation desdits bobinages, une résine de surmoulage remplissant des interstices internes résiduels laissés dans le corps ferromagnétique, les bobinages et le câblage, caractérisé en ce qu'un volume mort est ménagé à l'intérieur de l'enceinte de protection métallique, et en ce que des moyens sont prévus pour mettre sous vide ledit volume mort avant fermeture de l'enceinte par soudage ou bouchon hermétique afin de faire régner dans ledit volume mort une pression inférieure à la pression atmosphérique.

Le volume mort est formé de préférence à l'arrière du passage hermétique.

De façon plus particulière, l'enceinte de protection métallique comprend un perçage permettant de créer le vide dans ledit volume mort et un bouchon de fermeture soudé en maintenant le vide pour obturer ledit perçage.

Le volume mort peut présenter une capacité supérieure à 100 cm³ et même de l'ordre de plusieurs centaines de cm³.

Le chemise fine présente une épaisseur comprise entre 0,3 et 2 mm et de préférence comprise entre 0,4 et 1 mm.

L'entrefer Δ entre l'armature rotorique et l'induit de stator peut être compris de préférence entre 0,4 et 3 mm.

L'invention s'applique aussi bien à un palier radial qu'à un palier axial dont l'induit coopère avec une armature rotorique en forme de disque perpendiculaire au rotor.

La chemise fine peut être par exemple en acier inoxydable du type 17-4 PH, 316L ou 904L ou en inconel.

L'invention a encore pour objet un procédé de fabrication d'une machine tournante chemisée selon la revendication 12 équipée d'un rotor en contact avec une atmosphère gazeuse ou liquide corrosive, acide ou porteuse de particules, et d'un ensemble électrique fonctionnel, comprenant les étapes consistant à former une armature rotorique et rendre celle-ci solidaire du rotor, former en regard de ladite armature rotorique un induit de stator comprenant au moins un bobinage et un corps ferromagnétique placés dans une enceinte de protection métallique comprenant une partie massive solidaire du support fixe ou confondue avec celui-ci, une chemise fine et un passage hermétique pour un câblage d'alimentation desdits bobinages, et injecter à l'intérieur de ladite enceinte de protection métallique une résine de surmoulage remplissant des interstices résiduels laissés dans le corps ferromagnétique, les bobinages et le câblage, caractérisé en ce que l'on ménage à l'intérieur de l'enceinte de protection métallique un volume mort et en ce que l'on met sous vide ledit volume mort avant fermeture de l'enceinte par soudage ou bouchon hermétique afin de faire régner dans ledit volume mort une pression inférieure à la pression atmosphérique.

De façon plus particulière, on forme dans l'enceinte de protection métallique un perçage débouchant dans le volume mort et on soude en maintenant le vide, par exemple par bombardement électronique, un bouchon de fermeture obturant le perçage.

### Brève description des dessins

D'autres caractéristiques et avantages de l'invention ressortiront à la lecture de la description suivante de modes particuliers de réalisation de l'invention, donnés à titre d'exemples, en référence aux dessins annexés, sur lesquels :
- la figure 1 est une vue en demi-coupe axiale, d'un exemple de réalisation d'un palier magnétique radial chemisé selon l'invention ;
- la figure 2 est une vue en demi-coupe axiale d'un exemple de réalisation d'un palier magnétique axial chemisé selon l'invention,
- la figure 3 est une vue en demi-coupe axiale d'un exemple de palier magnétique radial chemisé selon l'art antérieur, et
- la figure 4 est une vue en demi-coupe axiale d'un exemple de palier magnétique axial chemisé selon l'art antérieur.

### Description détaillée de modes de réalisation préférentiels

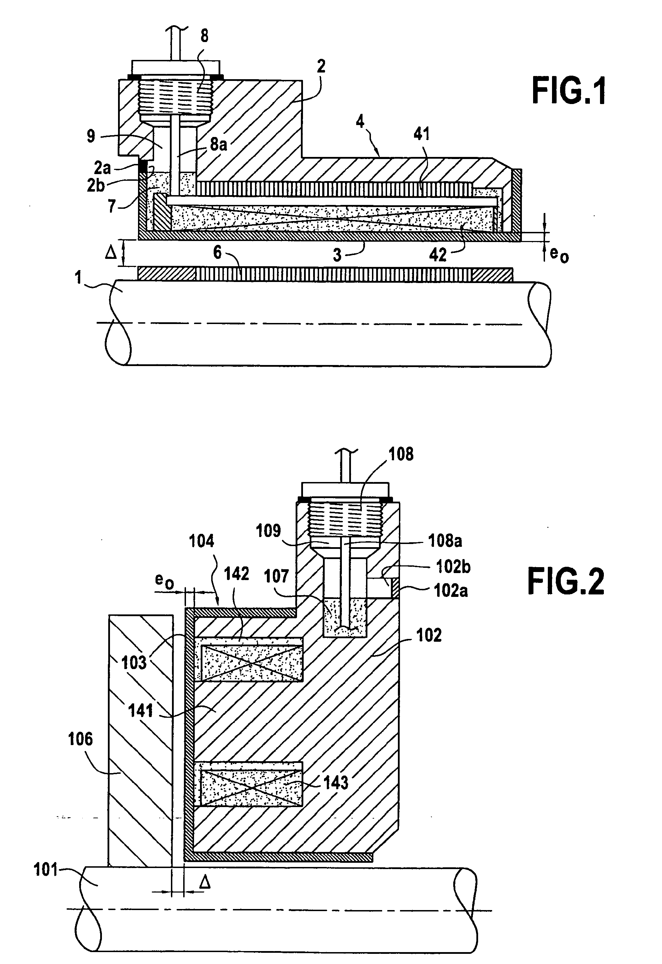

Les figures 1 et 2 montrent des exemples de paliers magnétiques chemisés conformes à l'invention.

Les éléments communs entre le palier magnétique radial chemisé de la figure 1 et le palier magnétique radial chemisé connu de la figure 3 portent les mêmes numéros de référence et ne seront pas décrits à nouveau.

De même, les éléments communs entre le palier magnétique axial chemisé de la figure 2 et le palier axial chemisé connu de la figure 4 portent les mêmes numéros de référence et ne seront pas décrits à nouveau.

Selon l'invention, un volume mort 9 (figure 1) respectivement 109 (figure 2) dans lequel règne une pression inférieure à la pression atmosphérique est ménagé à l'intérieur de l'enceinte de protection métallique 2, 3, 8 respectivement 102, 103, 108. Le volume mort 9 respectivement 109 est formé à l'arrière du passage hermétique 8 respectivement 108 prévu pour le câblage 8a respectivement 108a d'alimentation des bobinages 42 respectivement 142, 143. La résine de surmoulage 7 respectivement 107 remplit ainsi des interstices résiduels laissés dans le corps ferromagnétique 41 respectivement 141, les bobinages 42 respectivement 142, 143 et le câblage 8a respectivement 108a, mais un volume mort 9, respectivement 109 est réservé près du passage hermétique 8 respectivement 108.

Le volume mort 9 respectivement 109 peut présenter une capacité de quelques centaines de cm³, par exemple, entre 100 et 400 cm³, ou même des valeurs supérieures selon la taille de la machine tournante.

Par ailleurs, selon un aspect important de la présente invention, la fermeture du palier est faite en maintenant le vide.

Ainsi, selon l'invention, le palier magnétique chemisé radial ou axial est rempli d'une résine de surmoulage 7 respectivement 107 en laissant un vide 9 respectivement 109 à l'arrière du passage hermétique 8 respectivement 108 de sortie des fils 8a respectivement 108a.

Un perçage 2b respectivement 102b formé dans l'enceinte de protection métallique 2, 3, 8 respectivement 102, 103, 108 permet d'avoir accès au volume mort 9 respectivement 109 afin de pouvoir effectuer le vide. L'herméticité de l'ensemble peut être contrôlée sous hélium à l'aide de cet accès 2b respectivement 102b.

Un bouchon de fermeture 2a respectivement 102a est ensuite soudé en maintenant le vide, par exemple par bombardement électronique, pour obturer le perçage 2b respectivement 102b.

Le volume mort 9 respectivement 109 aménagé dans le palier permet de stocker le gaz migrant au travers des fuites des parois, des soudures ou des moyens de raccordement électrique constituant l'enceinte de protection métallique du palier.

Le volume mort 9 respectivement 109 est défini de façon à être suffisant pour que les fuites puissent y être stockées sans aboutir à une surpression qui déformerait ou détériorerait la chemise 3 respectivement 103 en cas de dépressurisation. La chemise 103 est particulièrement sensible dans le cas d'un palier axial parce que la chemise 103 est alors très fine et large.

De façon typique, une chemise 3 respectivement 103 présente une épaisseur e0 comprise entre 0,3 et 2 mm et de préférence entre 0,4 et 1 mm, ce qui est du même ordre que la valeur d'un entrefer Δ défini entre l'armature rotorique 6 respectivement 106 et l'induit de stator 4 respectivement 104.

La chemise 3, 103 peut en particulier être en acier inoxydable magnétique de type 17-4 PH ou en acier inoxydable non magnétique 316L ou 904L ou encore en inconel, mais ces matériaux ne sont pas limitatifs.

L'ajout d'un volume mort 9 respectivement 109 permet d'augmenter le temps de vie en fonction de la pression de l'enceinte. Ainsi, un volume mort de 100 cm³ pour une enceinte autorisant une surpression interne de 1 bar permet d'obtenir dans le cas d'un taux de fuite de 1*10⁻⁸ mbar * l/s et d'un fonctionnement sous 100 bar, 1 200 jours, soit environ 3 ans, avant d'envisager une maintenance au cours de laquelle l'enceinte est retirée, ouverte afin de retirer le gaz qui y a été stocké au travers des fuites et refermée. Par contre, pendant ces 1 200 jours, la pression interne n'a cessé d'augmenter et est donc supérieure à la pression atmosphérique, si le vide n'a pas été fait au préalable. En cas de dépressurisation on observera une déformée qui pourra aller jusqu'à combler l'entrefer (Δ) si le vide n'a pas été fait au départ dans le volume mort 9 respectivement 109.

Dans le cas où, comme selon la présente invention, un volume mort de quelques centaines de cm³ est ménagé dans l'enceinte du palier chemisé avec une fermeture du palier réalisée en maintenant le vide, il n'existe plus de risque d'endommagement du palier en cas de dépressurisation pendant un temps très long.

En particulier, le gaz migrant à l'intérieur de l'enceinte via les fuites ne peut pas créer d'ambiance explosible car l'oxygène est absent.

Il existe une zone de pression interne entre 0 et 1 bar absolu dans laquelle quelle que soit la pression extérieure supérieure à 1 bar absolu, il n'existe aucune déformation de la chambre 3 respectivement 103 de faible épaisseur car la pression extérieure la maintient toujours plaquée contre le noyau 41 respectivement 141.

Le temps de vie ou intervalle de maintenance préventive est augmenté de manière très significative.

Ainsi, dans l'exemple d'une butée axiale de diamètre 450 mm munie d'une chemise 103 d'épaisseur 0,5 mm, fabriquée avec un volume interne ménagé de 200 cm³, mais non fermée sous vide, une durée de 240 jours (environ 8 mois) est nécessaire pour que la pression interne dangereuse (voire catastrophique) en cas de dépressurisation soit atteinte (0,1 bar soit 1,1 bar absolu).

En revanche, si l'enceinte a été fermée sous vide, et que le même volume interne 109 est sous vide au départ, cette même pression interne de 1,1 bar sera atteinte en 2640 jours (7,2 ans).

Pendant 2 400 jours (6,6 ans) la pression interne sera inférieure à 1 bar absolu, c'est-à-dire que, même en cas de dépressurisation de l'atmosphère gazeuse dans laquelle baignent le rotor 101 et l'armature 106, la chemise 103 ne subira aucune déformée.

Il est courant dans les industries du gaz dans lesquelles les paliers magnétiques sont employés (compresseurs, turbo-expandeurs) d'effectuer une maintenance préventive tous les 5 ans. Au cours de cette maintenance, l'évacuation et la remise sous vide de l'enceinte peut être envisagée. Une telle conception d'introduction d'un volume mort sous vide répond donc bien à ce besoin.

On notera que l'invention s'applique à des paliers magnétiques chemisés radiaux et axiaux, à un moteur électrique chemisé, que le chemisage du moteur soit métallique ou non métallique, de même qu'à des ensembles de paliers magnétiques chemisés associés à des détecteurs chemisés de type inductif ou même à des détecteurs chemisés axiaux ou radiaux de type inductif pris isolément et comportant chacun une armature solidaire du rotor et un induit de stator comprenant un noyau ferromagnétique et des bobinages, lequel induit de stator est placé dans une enceinte de protection métallique comprenant, comme dans le cas des paliers magnétiques proprement dits, une partie massive solidaire du corps ferromagnétique ou confondue avec celui-ci, une chemise fine et un passage hermétique pour des fils d'alimentation des bobinages de l'induit de stator. Dans ce cas, comme dans le cas des paliers magnétiques proprement dits, une résine de surmoulage n'occupe pas tous les interstices résiduels laissés libres à l'intérieur de l'enceinte de protection métallique, mais un volume mort dans lequel règne une pression inférieure à la pression atmosphérique est ménagé à l'intérieur de l'enceinte de protection métallique.

Toutefois, les détecteurs occupant chacun un volume plus restreint que celui d'un palier magnétique associé, le volume mort formé au voisinage du passage hermétique et dans lequel un vide a été créé à travers un perçage ensuite obturé par un bouchon de fermeture soudé en maintenant le vide, peut présenter une capacité réduite par exemple comprise entre 50 et 150 cm³.

Diverses modifications et adjonctions peuvent être apportées aux modes de réalisation décrits sans sortir du cadre de l'invention.

Ainsi, au cours du procédé de fabrication d'une machine tournante selon l'invention, il est possible de soumettre cette machine à un cycle thermique ou autre traitement permettant de désolidariser la résine de surmoulage 7 respectivement 107 des surfaces de l'enceinte 2, 3, 8 respectivement 102, 103, 108, afin que toute partie située près de la chemise 3 respectivement 103 soit en communication de pression avec le volume mort 9 respectivement 109.

## Revendications

1. Machine tournante chemisée équipée d'un rotor (1 ; 101) en contact avec une atmosphère gazeuse ou liquide corrosive, acide ou porteuse de particules, et d'un ensemble électrique fonctionnel comprenant une armature rotorique (6 ; 106) solidaire du rotor (1 ; 101) et placée dans ladite atmosphère gazeuse et un induit de stator (4; 104) solidaire d'un support fixe (2 ; 102) et placé en regard de ladite armature rotorique (6 ; 106), l'induit de stator (4 ; 104) comprenant au moins un bobinage (42 ; 142, 143) et un corps ferromagnétique (41 ; 141) placés dans une enceinte de protection métallique comprenant une partie massive solidaire du support fixe (2 ; 102) ou confondue avec celui-ci, une chemise fine (3 ; 103) et un passage hermétique (8 ; 108) pour un câblage (8a ; 108a) d'alimentation desdits bobinages (42 ; 142, 143), une résine de surmoulage (7 ; 107) remplissant des interstices internes résiduels laissés dans le corps ferromagnétique (41 ; 141), les bobinages (42 ; 142, 143) et le câblage (8a ; 108a), **caractérisée en ce qu'**un volume mort (9 ; 109) est ménagé à l'intérieur de l'enceinte de protection métallique (2, 3, 8 ; 102, 103, 108), et **en ce que** des moyens (2b ; 102b) sont prévus pour mettre sous vide ledit volume mort (9 ; 109) avant fermeture de l'enceinte par soudage ou bouchon hermétique (2a ; 102a) afin de faire régner dans ledit volume mort (9 ; 109) une pression inférieure à la pression atmosphérique.

2. Machine selon la revendication 1, **caractérisée en ce que** ledit volume mort (9 ; 109) est formé à l'arrière dudit passage hermétique (8 ; 108).

3. Machine selon la revendication 1 ou la revendication 2, **caractérisée en ce que** l'enceinte de protection métallique (2, 3, 8 ; 102, 103, 108) comprend un perçage (2b ; 102b) permettant de créer le vide dans ledit volume mort (9 ; 109) et un bouchon de fermeture (2a ; 102a) soudé en maintenant le vide pour obturer ledit perçage (2b ; 102b).

4. Machine selon l'une quelconque des revendications 1 à 3, **caractérisée en ce que** le volume mort (9 ; 109) présente une capacité supérieure à 100 cm³.

5. Machine selon l'une quelconque des revendications 1 à 4, **caractérisée en ce que** la chemise fine (3 ; 103) présente une épaisseur comprise entre 0,3 et 2 mm.

6. Machine selon l'une quelconque des revendications 1 à 5, **caractérisée en ce que** l'entrefer (Δ) entre l'armature rotorique (6 ; 106) et l'induit de stator (4 ; 104) est compris entre 0,4 et 3 mm.

7. Machine selon l'une quelconque des revendications 1 à 6, **caractérisée en ce que** la chemise fine (3 ; 103) est en acier inoxydable magnétique du type 17-4 PH, en acier inoxydable non magnétique 316L ou 904L ou en inconel.

8. Machine selon l'une quelconque des revendications 1 à 7, **caractérisée en ce que** l'ensemble électrique fonctionnel est constitué par un palier magnétique axial avec une armature rotorique (106) en forme de disque perpendiculaire au rotor (101).

9. Machine selon l'une quelconque des revendications 1 à 7, **caractérisée en ce que** l'ensemble électrique fonctionnel est constitué par un palier magnétique radial.

10. Machine selon l'une quelconque des revendications 1 à 7, **caractérisée en ce que** l'ensemble électrique fonctionnel est constitué par un moteur électrique chemisé.

11. Machine selon l'une quelconque des revendications 1 à 7, **caractérisée en ce que** l'ensemble électrique fonctionnel est constitué par un détecteur chemisé associé à un palier magnétique.

12. Procédé de fabrication d'une machine tournante chemisée équipée d'un rotor (1 ; 101) en contact avec une atmosphère gazeuse ou liquide corrosive, acide ou porteuse de particules, et d'un ensemble électrique fonctionnel, comprenant les étapes consistant à former une armature rotorique (6 ; 106) et rendre celle-ci solidaire du rotor (1 ; 101), former en regard de ladite armature rotorique (6 ; 106), un induit de stator (4 ; 104) comprenant au moins un bobinage (42 ; 142, 143) et un corps ferromagnétique (41 ; 141) placés dans une enceinte de protection métallique comprenant une partie massive solidaire du support fixe (2 ; 102) ou confondue avec celui-ci, une chemise fine (3 ; 103) et un passage hermétique (8 ; 108) pour un câblage (8a ; 108a) d'alimentation desdits bobinages (42 ; 142, 143), et injecter à l'intérieur de ladite enceinte de protection métallique une résine de surmoulage (7 ; 107) remplissant des interstices résiduels laissés dans le corps ferromagnétique (41 ; 141), les bobinages (42 ; 142, 143) et le câblage (8a ; 108a), **caractérisé en ce que** l'on ménage à l'intérieur de l'enceinte de protection métallique (2, 3, 8 ; 102, 103, 108) un volume mort (9 ; 109) et **en ce que** l'on met sous vide ledit volume mort (9 ; 109) avant fermeture de l'enceinte par soudage ou bouchon hermétique (2a ; 102a) afin de faire régner dans ledit volume mort (9 ; 109) une pression inférieure à la pression atmosphérique.

13. Procédé selon la revendication 12, **caractérisé en ce que** le volume mort (9 ; 109) est formé à l'arrière dudit passage hermétique (8 ; 108).

14. Procédé selon la revendication 12 ou la revendication 13, **caractérisé en ce que** l'on forme dans l'enceinte de protection métallique (2, 3, 8 ; 102 ; 103, 108) un perçage (2b ; 102b) débouchant dans le volume mort (9 ; 109), et **en ce que** l'on fait le vide dans le volume mort (9 ; 109) et **en ce que** l'on soude en maintenant le vide un bouchon de fermeture (2a ; 102a) obturant ledit perçage (2b ; 102b).

15. Procédé selon l'une quelconque des revendications 12 à 14, **caractérisé en ce que** le volume mort (9 ; 109) présente une capacité supérieure à 100 cm³.

16. Procédé selon l'une quelconque des revendications 12 à 15, **caractérisé en ce que** l'on soumet la machine tournante à un traitement conduisant à désolidariser la résine de surmoulage (7 ; 107) des surfaces de l'enceinte (2, 3, 8 ; 102, 103, 108) afin que toute partie située près de la chemise (3 ; 103) soit en communication de pression avec le volume mort (9 ; 109).

## Claims

1. A canned or sleeved rotary machine equipped with a rotor (1; 101) in contact with a particle-laden, acidic or corrosive liquid or gaseous atmosphere, and with a functional electrical assembly comprising a rotor armature (6; 106) secured to the rotor (1; 101) and placed in said gaseous atmosphere and a stator armature (4; 104) secured to a stationary support (2; 102) and positioned facing said rotor armature (6; 106), the stator armature (4; 104) comprising at least one winding (42; 142, 143) and a ferromagnetic body (41; 141) which are positioned in a protective metal enclosure comprising a solid part secured to the stationary support (2; 102) or coincident therewith, a thin can or sleeve (3; 103) and a hermetic passage (8; 108) for wiring (8a; 108a) supplying said windings (42; 142, 143), a potting compound (7; 107) filling residual internal gaps left in the ferromagnetic body (41; 141), the windings (42; 142, 143) and the wiring (8a; 108a), **characterized in that** a dead volume (9; 109) is created inside the protective metal enclosure (2, 3, 8; 102, 103, 108), and **in that** means (2b; 102b) are provided to create a vacuum in said dead volume (9; 109) before closure of the enclosure by welding or blanking plug (2a; 102a) so that a pressure below atmospheric pressure is created in said dead volume (9; 109).

2. The machine according to claim 1, **characterized in that** said dead volume (9; 109) is formed behind said hermetic passage (8; 108).

3. The machine according to claim 1 or claim 2, **characterized in that** the protective metal enclosure (2, 3, 8; 102, 103, 108) comprises a drilling (2b; 102b) so that the vacuum can be created in said dead volume (9; 109) and a blanking plug (2a; 102a) welded in position to plug said drilling (2b; 102b) while at the same time maintaining the vacuum.

4. The machine according to any one of claims 1 to 3, **characterized in that** the dead volume (9; 109) has a capacity in excess of 100 cm³.

5. The machine according to any one of claims 1 to 4, **characterized in that** the thin can or sleeve (3; 103) has a thickness of between 0.3 and 2 mm.

6. The machine according to any one of claims 1 to 5, **characterized in that** the air gap (Δ) between the rotor armature (6; 106) and the stator armature (4; 104) is between 0.4 and 3 mm.

7. The machine according to any one of claims 1 to 6, **characterized in that** the thin can or sleeve (3; 103) is made of magnetic stainless steel of the 17-4 PH type, of non-magnetic stainless steel 316L or 904L or of inconel.

8. The machine according to any one of claims 1 to 7, **characterized in that** the functional electrical assembly consists of an axial magnetic bearing with a rotor armature (106) in the form of a disk perpendicular to the rotor (101).

9. The machine according to any one of claims 1 to 7, **characterized in that** the functional electrical assembly consists of a radial magnetic bearing.

10. The machine according to any one of claims 1 to 7, **characterized in that** the functional electrical assembly consists of a canned electric motor.

11. The machine according to any one of claims 1 to 7, **characterized in that** the functional electrical assembly consists of a sleeved detector associated with a magnetic bearing.

12. A method of manufacturing a canned or sleeved rotary machine equipped with a rotor (1; 101) in contact with a particle-laden, acidic or corrosive liquid or gaseous atmosphere and a functional electrical assembly, comprising the steps that consist in forming a rotor armature (6; 106) and securing it to the rotor (1; 101), forming, facing said rotor armature (6; 106), a stator armature (4; 104) comprising at least one winding (42; 142, 143) and a ferromagnetic body (41; 141) which are positioned in a protective metal enclosure comprising a solid part secured to the stationary support (2; 102) or coincident therewith, a thin can or sleeve (3; 103) and a hermetic passage (8; 108) for a wiring (8a; 108a) supplying said windings (42; 142, 143), and in injecting into said protective metal enclosure a potting compound (7; 107) that fills the residual gaps left in the ferromagnetic body (41; 141), the windings (42; 142, 143) and the wiring (8a; 108a), **characterized in that** a dead volume (9; 109) is created inside the protective metal enclosure (2, 3, 8; 102, 103, 108) and **in that** a vacuum is created in said dead volume (9; 109) before closure of the enclosure by welding or blanking plug (2a; 102a) so that a pressure below atmospheric pressure is created in said dead volume (9; 109).

13. The method according to claim 12, **characterized in that** the dead volume (9; 109) is formed behind said hermetic passage (8 ; 108).

14. The method according to claim 12 or claim 13, **characterized in that** a drilling (2b; 102b) which opens into the dead volume(9; 109) is formed in the protective metal enclosure (2, 3, 8; 102, 103, 108) and **in that** the vacuum is created in the dead volume (9; 109) and a blanking plug (2a; 102a) that plugs said drilling (2b; 102b) is welded into position while at the same time maintaining the vacuum.

15. The method according to any one of claims 12 to 14, **characterized in that** the dead volume (9; 109) has a capacity in excess of 100 cm³.

16. The method according to any one of claims 12 to 15, **characterized in that** the rotary machine is subjected to a treatment that involves disconnecting the potting compound (7; 107) from the surfaces of the enclosure (2, 3, 8; 102, 103, 108) so that any part located near the can or sleeve (3; 103) can communicate in terms of pressure with the dead volume (9; 109).

## Patentansprüche

1. Ummantelte umlaufende Maschine, die mit einem Rotor (1; 101), der mit einer gashaltigen oder flüssigen korrosiven, sauren oder partikeltragenden Atmosphäre in Kontakt ist, und mit einer elektrischen Funktionseinheit ausgestattet ist, die eine Rotorarmierung (6; 106), welche mit dem Rotor (1;101) fest verbunden und in der gashaltigen Atmosphäre angeordnet ist, sowie einen Statoranker (4; 104), der mit einem festen Träger (2; 102) fest verbunden und gegenüber der Rotorarmierung (6;106) gelegen ist, umfaßt, wobei der Statoranker (4; 104) wenigstens eine Wicklung (42; 142, 143) und einen ferromagnetischen Körper (41; 141) umfaßt, die in einem metallischen Schutzraum angeordnet sind, der einen massiven Teil, welcher mit dem festen Träger (2; 102) fest verbunden oder mit diesem verschmolzen ist, einen dünnen Mantel (3; 103) sowie einen hermetischen Durchgang (8; 108) für eine Verkabelung (8a; 108a) zur Versorgung der Wicklungen (42; 142, 143) umfaßt, wobei ein Vergußharz (7; 107) in dem ferromagnetischen Körper (41; 141), den Wicklungen (42; 142, 143) und der Verkabelung (8a; 108a) gelassene restliche innere Zwischenräume ausfüllt, **dadurch gekennzeichnet, daß** innerhalb des metallischen Schutzraums (2, 3, 8; 102, 103, 108) ein Totvolumen (9; 109) ausgebildet ist und daß Mittel (2b; 102b) vorgesehen sind, um das Totvolumen (9; 109) vor Verschließen des Raumes durch Verschweißen oder mittels hermetischem Pfropfen (2a; 102a) zu evakuieren, um in dem Totvolumen (9; 109) einen Druck herrschen zu lassen, der geringer als der atmosphärische Druck ist.

2. Maschine nach Anspruch 1, **dadurch gekennzeichnet, daß** das Totvolumen (9; 109) im hinteren Teil des hermetischen Durchgangs (8; 108) ausgebildet ist.

3. Maschine nach Anspruch 1 oder Anspruch 2, **dadurch gekennzeichnet, daß** der metallische Schutzraum (2, 3, 8; 102, 103, 108) eine Bohrung (2b; 102b), welche das Erzeugen eines Vakuums in dem Totvolumen (9; 109) ermöglicht, sowie einen Verschlußpfropfen (2a; 102a) umfaßt, der unter Aufrechterhalten des Vakuums angeschweißt wird, um die Bohrung (2b; 102b) zu verschließen.

4. Maschine nach einem der Ansprüche 1 bis 3, **dadurch gekennzeichnet, daß** das Totvolumen (9; 109) ein Fassungsvermögen von über 100 cm³ aufweist.

5. Maschine nach einem der Ansprüche 1 bis 4, **dadurch gekennzeichnet, daß** der dünne Mantel (3; 103) eine Dicke zwischen 0,3 und 2 mm aufweist.

6. Maschine nach einem der Ansprüche 1 bis 5, **dadurch gekennzeichnet, daß** der Luftspalt (Δ) zwischen der Rotorarmierung (6; 106) und dem Statoranker (4; 104) 0,4 bis 3 mm beträgt.

7. Maschine nach einem der Ansprüche 1 bis 6, **dadurch gekennzeichnet, daß** der dünne Mantel (3; 103) aus rostfreiem, magnetischem Stahl vom Typ 17-4 PH, aus rostfreiem, nicht magnetischem Stahl 316L oder 904L oder aus Inconel besteht.

8. Maschine nach einem der Ansprüche 1 bis 7, **dadurch gekennzeichnet, daß** die elektrische Funktionseinheit von einem axialen Magnetlager mit einer scheibenförmigen Rotorarmierung (106) senkrecht zum Rotor (101) gebildet ist.

9. Maschine nach einem der Ansprüche 1 bis 7, **dadurch gekennzeichnet, daß** die elektrische Funktionseinheit von einem radialen Magnetlager gebildet ist.

10. Maschine nach einem der Ansprüche 1 bis 7, **dadurch gekennzeichnet, daß** die elektrische Funktionseinheit von einem ummantelten Elektromotor gebildet ist.

11. Maschine nach einem der Ansprüche 1 bis 7, **dadurch gekennzeichnet, daß** die elektrische Funktionseinheit von einem ummantelten Detektor, der einem Magnetlager zugeordnet ist, gebildet ist.

12. Verfahren zur Herstellung einer ummantelten umlaufenden Maschine, die mit einem Rotor (1; 101), der mit einer gashaltigen oder flüssigen korrosiven, sauren oder partikeltragenden Atmosphäre in Kontakt ist, und mit einer elektrischen Funktionseinheit ausgestattet ist, umfassend die Schritte, die darin bestehen, eine Rotorarmierung (6; 106) auszubilden und diese fest mit dem Rotor (1; 101) zu verbinden, gegenüber der Rotorarmierung (6; 106) einen Statoranker (4; 104) zu bilden, der wenigstens eine Wicklung (42; 142, 143) und einen ferromagnetischen Körper (41; 141) umfaßt, die in einem metallischen Schutzraum angeordnet sind, der einen massiven Teil, welcher mit dem festen Träger (2; 102) fest verbunden oder mit diesem verschmolzen ist, einen dünnen Mantel (3; 103) sowie einen hermetischen Durchgang (8; 108) für eine Verkabelung (8a; 108a) zur Versorgung der Wicklungen (42; 142, 143) umfaßt, und in den metallischen Schutzraum ein Vergußharz (7; 107) einzuspritzen, das in dem ferromagnetischen Körper (41; 141), den Wicklungen (42; 142, 143) und der Verkabelung (8a; 108a) gelassene restliche Zwischenräume ausfüllt, **dadurch gekennzeichnet, daß** innerhalb des metallischen Schutzraums (2, 3, 8; 102, 103, 108) ein Totvolumen (9; 109) ausgebildet wird und daß das Totvolumen (9; 109) vor Verschließen des Raumes durch Verschweißen oder mittels hermetischem Pfropfen (2a; 102a) evakuiert wird, um in dem Totvolumen (9; 109) einen Druck herrschen zu lassen, der geringer als der atmosphärische Druck ist.

13. Verfahren nach Anspruch 12, **dadurch gekennzeichnet, daß** das Totvolumen (9; 109) im hinteren Teil des hermetischen Durchgangs (8; 108) ausgebildet ist.

14. Verfahren nach Anspruch 12 oder Anspruch 13, **dadurch gekennzeichnet, daß** in dem metallischen Schutzraum (2, 3, 8; 102, 103, 108) eine Bohrung (2b; 102b) ausgebildet wird, die in das Totvolumen (9; 109) mündet, und daß in dem Totvolumen (9, 109) ein Vakuum erzeugt wird und daß unter Aufrechterhalten des Vakuums ein die Bohrung (2b; 102b) verschließender Verschlußpfropfen (2a; 102a) angeschweißt wird.

15. Verfahren nach einem der Ansprüche 12 bis 14, **dadurch gekennzeichnet, daß** das Totvolumen (9; 109) ein Fassungsvermögen von über 100 cm³ aufweist.

16. Verfahren nach einem der Ansprüche 12 bis 15, **dadurch gekennzeichnet, daß** die umlaufende Maschine einer Behandlung unterzogen wird, die dazu führt, daß das Vergußharz (7; 107) von den Oberflächen des Raumes (2, 3, 8; 102, 103, 108) gelöst wird, damit jeder nahe des Mantels (3; 103) gelegene Teil mit dem Totvolumen (9; 109) in Druckverbindung steht.
